Europäisches Patentamt

European Patent Office

Office européen des brevets

(19)

(11) Publication number: **0 110 585**
A1

# (12) EUROPEAN PATENT APPLICATION

(21) Application number: 83306699.6

(51) Int. Cl.³: **G 11 B 15/18**

(22) Date of filing: 03.11.83

---

(30) Priority: 26.11.82 US 444617

(71) Applicant: **NORTHERN TELECOM LIMITED,**
1600 Dorchester Boulevard West, Montreal Quebec
H3H 1R1 (CA)

(72) Inventor: **Vailliencourt, Dwayne George, 7131 Hashley
Road, Manchester Michigan 48158 (US)**
Inventor: **Haas, Robert Terry, 234 Judd Road, Milan
Michigan 48160 (US)**
Inventor: **Sims, Dewey McKinley, Jr., 38744 Laurenwood,
Wayne Michigan 48184 (US)**

(74) Representative: **Crawford, Andrew Birkby et al, A.A.
THORNTON & CO. Northumberland House 303-306 High
Holborn, London WC1V 7LE (GB)**

(43) Date of publication of application: 13.06.84
Bulletin 84/24

(84) Designated Contracting States: **DE FR GB IT NL SE**

---

(54) Drive motor assembly for a tape transport.

(57) A drive motor assembly for a tape transport (23) is disclosed
wherein the motor (10) is pivotally mounted. The motor (10) is
biased toward the tape cartridge (19) by means of a buckling
column spring (18). The pivoting is preferably provided by two
pins (16a, 16b) inserted into holes (26a, 26b) in opposite sides of
the motor housing along a common axis perpendicular to the
longitudinal axis of the motor's shaft.

EP 0 110 585 A1

## DRIVE MOTOR ASSEMBLY FOR A TAPE TRANSPORT

This invention relates generally to tape machines and more particularly to a motor mounting arrangement for use in a tape transport.

Tape transports are well known. Many types of tape carriers for use with these various transports are also well known. One such tape carrier that has found wide acceptance, particularly in the data recording field, is the model DC-300A cartridge manufactured by the Minnesota Mining and Manufacturing Co., commonly referred to as 3M.

A tape cartridge of this type employs an endless elastic belt driven by a drive wheel. This belt contacts two reels of tape and as the endless belt moves, the tape is driven from one reel to the other. A tape cartridge of this general type is described in greater detail in U.S. patent 3,692,255 by R.A. Von Behren issued September 19, 1972.

To drive such a tape cartridge the capstan of a tape drive motor is biased against the drive wheel of the cartridge. The capstan turns the drive wheel of the cartridge which in turn drives the endless belt which in turn moves the magnetic tape.

Many such tape driving mechanisms exist. One such tape driving mechanism employs a pivotally mounted tape drive motor. The motor, in such a device, is canted such that the capstan is moved towards the direction from which the cartridge will come when it is inserted into the tape machine. When the cartridge is inserted, the drive wheel of the cartridge contacts the capstan, and as the cartridge is pushed home, the capstan is moved further into the machine.

· Such a drive mechanism serves several purposes. It enables a force to be exerted, by the capstan, upon the drive wheel of the cartridge to ensure good frictional contact between the two. It also

2

allows for tolerance variations in the cartridge housing and in the positioning of the cartridge within the tape machine. It additionally allows for eccentricities in the roundness of both the capstan and the drive wheel.

Two patents which describe tape driving systems such as these are U.S. patent 3,924,823 dated December 9, 1975 to Wm. D. Cohen et al and U.S. patent 4,085,906 dated April 25, 1978 to J.C. Dahl et al, to which attention is directed.

Aforementioned patent 4,085,906 describes a pivotal mounting system whereby the motor is mounted to an attachment bracket. This bracket is mounted to the frame of the tape transport by three shoulder bolts extending through apertures in the bracket. A biasing spring surrounds each shoulder bolt and a pair of pivot pins are disposed between the bracket and the frame of the tape transport to allow the motor and bracket combination to pivot.

Aforementioned U.S. patent 3,924,823 describes a pivotal mounting system whereby a clamping arrangement holds the end of the motor, remote from the capstan, in a pivotal relationship. A helical compression spring is positioned against the side of the motor to bias it towards the cartridge.

Some of the problems existing in these prior art pivotal motor mounting schemes are as follows. If not enough pressure is applied to the drive wheel of the cartridge by the capstan, slippage may occur. If too much pressure is exerted, cartridge life can be shortened. Typical recommended pressures are 18 ounces to 22 ounces per American National Standard ANSI X3.55-1977.

3

As can be evidenced by the pivotal mounting schemes of the two previously mentioned U.S. patents, good control of the pressure exerted is difficult. To begin with, the pressure applied by the helical springs varies depending upon how much they are compressed. The pressure may be within limits for one cartridge but may be outside the limits for another cartridge due to the dimensional tolerances of the cartridges themselves. Due to the tolerance variations in the size of the cartridges the amount the springs are compressed varies and consequently so does the pressure exerted by the helical springs.

Additionally, it is relatively difficult and time consuming to make helical springs having predetermined characteristics such as spring force.

Summary of the Invention

The present invention is directed to providing a pivotal mounting system for a tape drive motor while allowing the pressure applied by the capstan to the drive wheel of the cartridge to be closely controlled.

The present invention pivotally mounts the end of the motor remote from the capstan and biases the capstan towards the cartridge holder of the tape machine by means of a buckling column spring (sometimes referred to as a constant force spring) bearing on a part of the motor remote from the pivotally mounted end.

Stated in other terms, the present invention is a drive motor assembly for use in a tape transport of the type wherein a chamber is provided to receive a tape carrier which is releasably positioned in the chamber, and wherein a capstan carried by and driven by a drive motor is provided to engage a drive wheel carried by the tape carrier whereby

4

transport of the tape in the carrier is effected by movement of the drive wheel, the drive motor assembly comprising: the motor; the capstan fixed to a shaft of the motor; means for pivotally mounting the motor to the tape transport whereby the resulting pivot point is towards an end of the motor remote from the end supporting the capstan; a buckling column spring having a first end fixed to the tape transport and having a second end fixed to the motor remote from the pivot point such that the capstan is biased toward the chamber; and a stop means in the tape transport, on the side of the motor remote from the spring, to provide a limit to the amount that the motor can pivot.

Brief Description of the Drawings:

The invention will now be described in more detail with reference to the accompanying drawings wherein like parts in each of the several figures are represented by like reference characters, and wherein:

Figure 1 is a greatly simplified side-view, partly in section, of a tape cartridge just beginning to engage the capstan of a motor;

Figure 2 is similar to Figure 1, but depicts the cartridge in its fully home position; and

Figure 3 is a view of motor 10 by itself as taken along the section line 3-3 of Figure 2.

Detailed Description

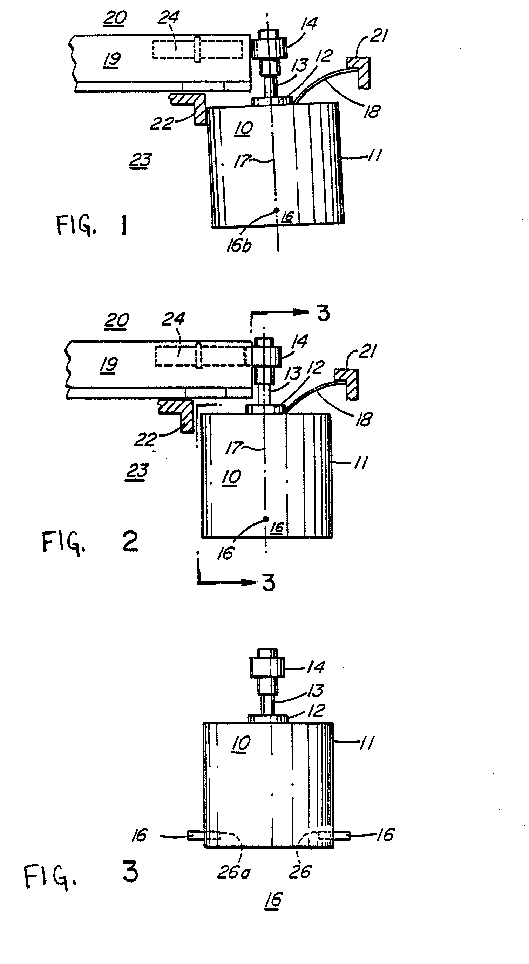

Figure 1 is a side view, partly in section, of motor 10 pivotally mounted according to the present invention, greatly simplified. Motor 10 comprises a generally cylindrical housing 11 with a boss 12 and a shaft 13 supporting a capstan 14.

5

Motor 10 is depicted mounted to a portion of the frame (not shown) of tape transport 23 by pivot means 16 (see also Figure 3). In one embodiment that has been constructed, pivot means 16 was provided by drilling two opposing holes (spaced 180° apart) part way into the base of the motor and inserting pin 16a into one hole and pin 16b into the other hole and providing means to accept these pins in the frame of tape transport 23. This allows axis 17 of motor 10 to pivot about pivot means 16. An alternative mounting means would be the clamping arrangement described in aforementioned U.S. patent 3,924,823.

As depicted in Figure 1, buckling column spring 18 biases capstan 14 towards cartridge 19. Note that cartridge 19 is situated in a chamber of tape transport 23 referred to generally by the reference character 20. Spring 18 has one end held (or fixed), as depicted, by frame member 21 and its other end held, due to tension, by boss 12. Spring 18 is rectangular in shape, is 1.055 inches long (i.e. between boss 12 and member 21) and is 0.50 inches wide. It is made of 0.007 inch thick spring steel.

As can be seen from Figure 1, spring 18 causes motor 10 to be biased to the left towards chamber 20 and to engage frame member 22 which acts as a stop to limit the movement of motor 10.

Figure 2 depicts cartridge 19 fully engaged in tape transport 23. Motor 10 has pivoted about its pivot means 16 (from its position in Figure 1) and capstan 14 is engaging drive wheel 24 of cartridge 19. Motor 10 is no longer engaging frame member 22 and spring 18 maintains an approximately constant force on motor 10, biasing motor 10 to the left in the Figure and thereby ensuring good frictional contact beween capstan 14 and drive wheel 24. In the exemplary embodiment

6

depicted in the Figures, the force exerted by spring 18 on motor 10 is approximately 44 ounces and is virtually the same regardless of whether or not a cartridge is in tape transport 23. The end result of this spring force on motor 10 is that capstan 14 exerts a force of approximately 22 ounces on drive wheel 24 (note: this reduction in force is due to a leverage effect).

Figure 3 is a simplified representation of motor 10 taken along the section line 3-3 of Figure 2, omitting cartridge 19 and frame member 22. Pins 16a and 16b are depicted protruding into holes (or recesses) 26a and 26b respectively in motor 10. Holes 26a and 26b are provided by drilling into the base of motor 10, ensuring that no electrical components are disrupted.

7

CLAIMS:

1.  A drive motor assembly for use in a tape transport (23) of the type wherein a chamber (20) is provided to receive a tape carrier (19) which is releasably postioned in said chamber, and wherein a capstan (14) carried by and driven by a drive motor (10) is provided to engage a drive wheel (24) carried by said tape carrier (19) whereby transport of the tape in said carrier is effected by movement of said drive wheel, said drive motor assembly characterized by:

said motor (10);

said capstan (14) fixed to a shaft (13) of said motor (10);

means (16) for pivotally mounting said motor to said tape transport (23) whereby the resulting pivot point is towards an end of the motor remote from the end supporting said capstan;

a buckling column spring (18) having a first end fixed to said tape transport (23) and having a second end fixed to said motor (10) remote from said pivot point such that said capstan (14) is biased toward said chamber (20); and

a stop means (22) in said tape transport (23), on the side of said motor remote from said spring (18), to provide a limit to the amount that said motor can pivot.

2.  The drive motor assembly of claim 1 wherein said motor includes a boss (12) surrounding the opening through which said shaft (13) protrudes, and said second end of said spring (18) is fixed to said boss (12).

8

3. The drive motor assembly of claim 2 wherein said spring (18) is fixed at both ends solely due to the force exerted by the spring (18) itself.

4. The drive motor assembly of claim 3 wherein said means (16) for pivotally mounting said motor (10) to said tape transport (23) comprises two pins (16a, 16b) carried by said tape transport and protruding into two holes (26a, 26b) in said motor, one pin per hole, and said holes (26a, 26b) spaced on opposing sides of said motor and having a common axis about which said motor can pivot.

20 24 14 21

19 13 12

22 18

10

23 17 11

16

16b

FIG. 1

20 24 3

19 14

13 12

22 18

17 11

23 10

16

16

3

FIG. 2

14

13

12

10 11

16 16

26a 26

16

FIG. 3

European Patent Office

**EUROPEAN SEARCH REPORT**

Application number

| | **DOCUMENTS CONSIDERED TO BE RELEVANT** | | EP 83306699.6 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| | | | G 11 B 15/18 |
| D,A | US - A - 4 085 906 (DAHL) <br> * Fig. 1-6; abstract * <br> -- | 1-4 | |
| D,A | US - A - 3 692 255 (VON BEHREN) <br> * Fig. 1-6 * <br> -- | 1,2 | |
| D,A | US - A - 3 924 823 (COHEN) <br> * Fig. 1-9; abstract * <br> -- | 1-4 | |
| A | DE - A1 - 2 029 441 (ZENTRONIK) <br> * Fig. 1 * <br> ---- | 1 | |

| TECHNICAL FIELDS SEARCHED (Int. Cl. ³) |
|---|
| G 11 B 15/00 |
| H 02 K  1/00 |
| G 03 B  1/00 |
| G 06 K 13/00 |
| B 65 H 17/00 |
| B 65 H 19/00 |
| B 65 H 23/00 |

The present search report has been drawn up for all claims

| Place of search | Date of completion of the search | Examiner |
|---|---|---|
| VIENNA | 27-02-1984 | BERGER |